# FASCICULE DE BREVET EUROPEEN

(11) **EP 0 972 977 B1**
(45) Date de publication et mention de la délivrance du brevet: **18.08.2004**
(21) Numéro de dépôt: 99401763.0
(22) Date de dépôt: 13.07.1999
(51) Int. Cl.: F16K 17/18, G05D 16/12, B01J 4/00, B65D 90/32

(54) **Dispositif de régulation de pression, système de fourniture de gaz et installation de distribution de liquide de travail correspondents**
Druckregler, Gasversorgungssystem und Installation zur Verteilung entsprechender Arbeitsfluide
Pressure regulator, gas supply system and distribution network for corresponding working fluids

(30) Priorité: 17.07.1998 FR 9809133
(43) Date de publication de la demande: 19.01.2000
(73) Titulaire: Air Liquide Electronics Systems, 75007 Paris Cedex 07 (FR)
(72) Inventeur: Guarneri, Georges, 38800 Le Pont de Claix (FR)
(74) Mandataire: Vesin, Jacques

(56) Documents cités:
- WO-A-94/13988
- FR-A- 2 239 630
- FR-A- 2 501 326
- FR-A- 2 560 340
- FR-A- 2 756 466
- US-A- 3 814 123
- US-A- 4 266 568
- US-A- 4 859 375
- US-A- 5 356 045
- US-A- 5 623 958

## Description

La présente invention concerne un système de fourniture de gaz à un récipient contenant un liquide chimique destiné à la microélectronique, comprenant un dispositif de régulation de pression, des moyens de raccordement d'une entrée dudit dispositif à une source dudit gaz sous pression, et une canalisation de mise en communication d'une sortie dudit dispositif avec le récipient.

Le document FR-A-2 560 340 décrit un système de fourniture de gaz conforme au préambule de la revendication 1.

L'invention s'applique en particulier à la fourniture de liquides de travail dans l'industrie électronique.

L'industrie électronique, et notamment l'industrie microélectronique, fait appel à l'utilisation de liquides de travail ultrapurs, comme par exemple H₂O₂, HCl, H₂S, etc.

De tels liquides sont généralement conditionnés dans des récipients de stockage dont la structure permet d'éviter la contamination de ces liquides, notamment grâce à la présence de revêtements intérieurs particulièrement coûteux et fragiles, par exemple réalisé en perfluoroalcoxy PFA).

La fragilité de ces revêtements intérieurs limite considérablement, à l'intérieur de ces récipients, les variations de pression admissibles autour de la pression atmosphérique à laquelle ces récipients sont soumis extérieurement.

Ainsi, la pression relative à l'intérieur de ces récipients doit être, par exemple, comprise entre -20 et +150 mbars.

Afin de respecter cette contrainte ainsi que d'éviter la contamination des liquides de travail à distribuer, on comble le vide créé dans un tel récipient, lors du soutirage du liquide de travail, par la fourniture de quantités correspondantes d'un gaz inerte ultrapur, typiquement de l'azote.

La fourniture d'azote à un récipient de stockage de liquide de travail est généralement assurée par un système de fourniture qui comprend un dispositif de régulation de pression, des moyens de raccordement d'une entrée du dispositif à une source de gaz inerte sous pression, munis de moyens de détente à une pression de consigne Pc comprise dans la plage de pressions admissibles à l'intérieur du récipient, et une canalisation de mise en communication d'une sortie du dispositif avec le récipient de stockage. Le dispositif de régulation de pression est destiné à empêcher l'endommagement du récipient de stockage en cas d'incident de fonctionnement.

Jusqu'à présent, deux types de dispositif de régulation de pression existent.

Dans le premier type, le dispositif comprend une mise en communication permanente avec l'atmosphère ambiante du canal reliant l'entrée et la sortie du dispositif de régulation, à travers un évent calibré. Ce type de dispositif, s'il protège bien les récipients de stockage contre des variations de pression relative intérieure, induit toutefois une consommation d'azote ultrapur permanente, que l'on distribue du liquide de travail ou non, ce qui entraîne des coûts de fonctionnement importants.

Dans le second type, le dispositif de régulation de pression comprend un clapet de refoulement à soupape équilibrée par un ressort, pour mettre en communication le canal du dispositif de régulation avec l'atmosphère ambiante. Un tel dispositif présente de nombreux inconvénients. En effet, il n'assure pas la sécurité des récipients, d'une part, contre une dépression éventuelle, et d'autre part, en cas de surpression importante en amont du dispositif de régulation, en raison des faibles débits de refoulement autorisés par ces clapets à soupape. De plus, ce type de dispositif impose de vérifier régulièrement les réglages du clapet à soupape et des moyens de détente, qui sont dépendants l'un de l'autre. Enfin, l'utilisation de pièces métalliques étant proscrite dans ces dispositifs de régulation pour préserver la pureté des gaz inertes, ce type de dispositif est complexe et coûteux à réaliser.

L'invention a pour but de résoudre ces problèmes en fournissant un dispositif de régulation de pression simple, de coûts de fabrication et de fonctionnement réduits, et permettant d'assurer la sécurité de récipients de stockage lors de la distribution de liquides ultrapurs de travail.

A cet effet l'invention a pour objet un système selon la revendication 1 ainsi qu'une installation de distribution de liquide selon la revendication 9.

Selon des modes particuliers de réalisation, le dispositif de régulation peut comprendre l'une ou plusieurs des caractéristiques suivantes, prises isolément ou selon toutes les combinaisons techniquement possibles :
- le premier clapet comprend un premier obturateur mobile entre une position inférieure d'obturation et une position supérieure d'écoulement, sous l'action d'une différence positive P⁺ entre les pressions régnant au niveau d'une partie du canal et dudit orifice d'évacuation, agissant contre l'action du poids propre du premier obturateur, ledit obturateur étant de masse calibrée pour équilibrer l'action d'une différence de pression prédéterminée P⁺c ;
- le premier obturateur est posé sur un siège destiné à être sensiblement horizontal ;
- l'orifice d'évacuation est un orifice de communication avec l'atmosphère ambiante de pression Pa, et P⁺c = Ps-Pa ;
- le deuxième clapet comprend un deuxième obturateur mobile entre une position inférieure d'obturation et une position supérieure d'écoulement, sous l'action d'une différence négative P⁻ entre les pressions régnant au niveau d'une partie dudit canal et dudit orifice d'admission, agissant contre l'action du poids propre du deuxième obturateur, ledit obturateur étant de masse calibrée pour équilibrer l'action d'une différence de pression négative prédéterminée P⁻c ;
- le deuxième obturateur est posé sur un siège destiné à être sensiblement horizontal ;
- l'orifice d'admission est un orifice de communication avec l'atmosphère ambiante de pression Pa, et P⁻c = Pi - Pa.

L'invention sera mieux comprise à la lecture de la description qui va suivre, donnée uniquement à titre d'exemple, et faite en se référant aux dessins annexés sur lesquels :
- la figure 1 est une vue latérale schématique, partiellement en coupe, d'une installation de distribution de liquide de travail selon l'invention, et
- les figures 2 à 4 sont des vues latérales, en coupe et agrandies, du dispositif de régulation de pression de l'installation de la figure 1, illustrant chacune le fonctionnement de ce dispositif de régulation dans des conditions différentes.

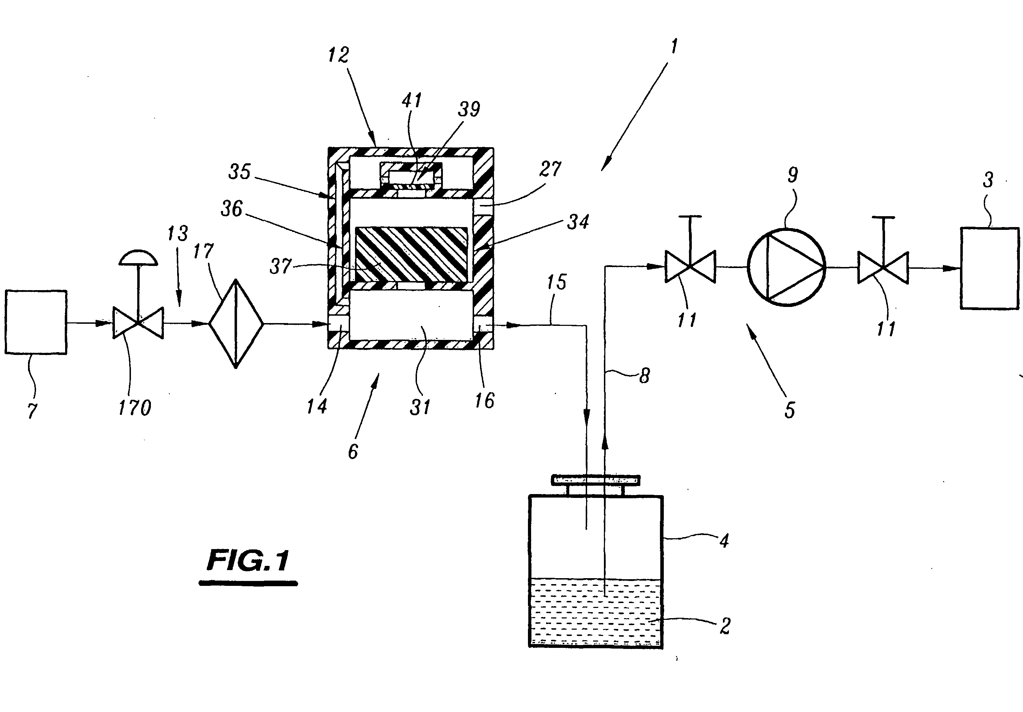

La figure 1 représente une installation 1 de distribution d'un liquide de travail ultrapur 2 à une unité consommatrice 3 d'un site industriel, par exemple de microélectronique.

Cette installation 1 comprend essentiellement un récipient 4 de stockage du liquide 2, des moyens 5 de distribution du liquide 2, un système 6 de fourniture de gaz inerte au récipient 4 et une source 7 d'azote ultrapur gazeux sous 10 bars absolus.

Le récipient 4 est revêtu intérieurement d'une couche de PFA (non représentée) de sorte que la pression relative régnant à l'intérieur de ce récipient 4 doit être comprise entre -20 mbars et +150 mbars.

Les moyens 5 de distribution comprennent une canalisation 8, plongeant dans le liquide 2 contenu dans le récipient 4, et munie d'une pompe 9 disposée entre deux vannes manuelles 11.

Le système 6 de fourniture d'azote ultrapur comprend essentiellement un dispositif 12 de régulation de pression, des moyens 13 de raccordement d'une entrée 14 du dispositif 12 à la source 7, et une canalisation 15 de mise en communication d'une sortie 16 du dispositif 12 avec la partie supérieure du récipient 4.

Les moyens 13 de raccordement comprennent, successivement dans le sens d'écoulement de l'azote, une vanne de détente 170 et un clapet d'arrêt et de non-retour 17.

La pompe 9 est dimensionnée pour pouvoir assurer la fourniture d'un débit maximal approprié de liquide de travail 2.

La vanne de détente 170 est dimensionnée et réglée pour assurer la détente de l'azote de la source 7 jusqu'à une pression de consigne Pc, correspondant à une pression relative proche de 40 mbars, et pour fournir un débit d'azote suffisant pour compenser le débit de la pompe 9 quel que soit son régime.

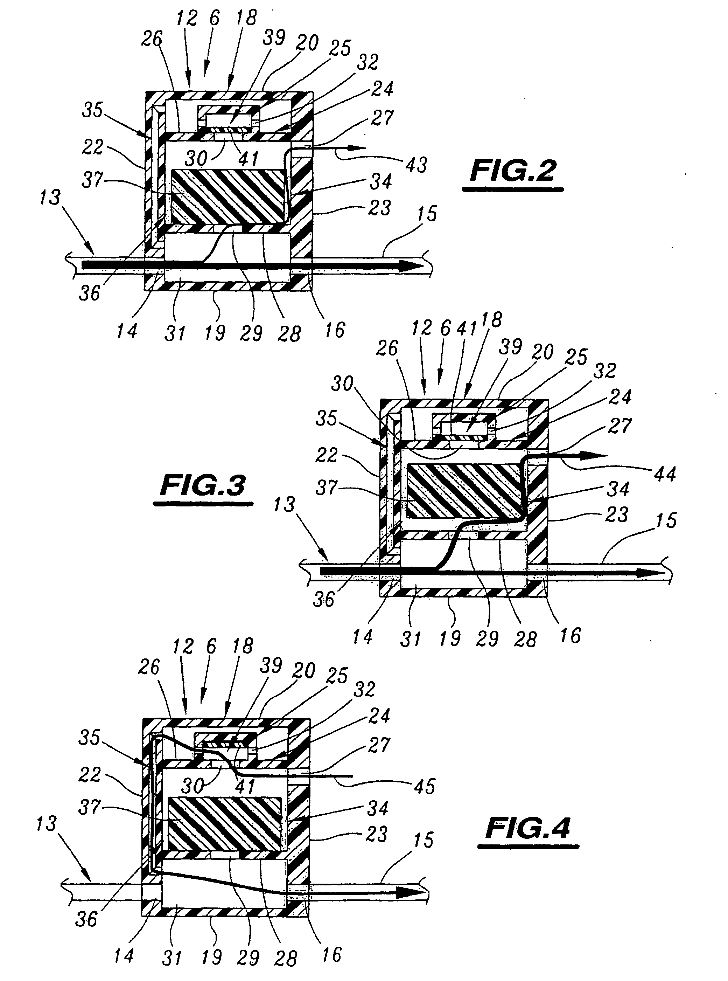

Le dispositif 12 de régulation de pression comprend (figure 2) une première boîte extérieure 18 sensiblement parallélépipédique et disposée avec ses faces inférieure 19 et supérieure 20 sensiblement horizontales.

L'entrée 14 et la sortie 16 du dispositif 12 sont des orifices calibrés, de section appropriée, ménagés chacun l'un en regard de l'autre dans des parties inférieures de faces latérales opposées 22 et 23 de la boîte 18.

Le dispositif 12 comprend également des parois disposées à l'intérieur de la boîte 18. Ces parois forment, d'une part, une deuxième boîte 24 sensiblement parallélépipédique, dont une face latérale est formée par une partie de la paroi 23 de la première boîte 18, et dont les autres faces sont disposées à distance et sensiblement parallèlement aux autres faces de la boîte 18. Lesdites parois forment, d'autre part, une troisième boîte 25 sensiblement parallélépipédique, de dimensions plus faibles que la deuxième boîte 24. La face inférieure de cette troisième boîte est formée par une partie de la face supérieure 26 de la deuxième boîte 24, et ses autres faces sont disposées à distance et sensiblement parallèlement aux faces correspondantes de la première boîte 18.

La face latérale 23 de la première boîte 18 est également percée, dans une partie supérieure, d'un orifice calibré 27, de section appropriée, mettant en communication l'intérieur de la deuxième boîte 24 avec l'atmosphère ambiante.

La face inférieure 28 de la deuxième boîte 24 est percée d'un orifice calibré 29, mettant l'intérieur de la deuxième boite 24 en communication avec le reste de la première boîte 18.

La face supérieure 26 de la deuxième boîte 24 est percée d'un orifice calibré 30, mettant en communication l'intérieur de la troisième boîte 25 avec l'intérieur de la deuxième boîte 24.

Les faces inférieures 19 de la boîte 18 et 28 de la boîte 24 délimitent entre elles un canal 31 reliant l'entrée 14 à la sortie 16 du dispositif 12.

Des faces latérales de la troisième boîte 25 sont percés d'orifices 32 mettant en communication l'intérieur de la troisième boîte 25, et donc l'intérieur de la deuxième boîte 24 via l'orifice 30, avec le reste de l'intérieur de la première boîte 18.

Les trois boîtes 18, 24 et 25 délimitent, d'une part, un premier passage 34 reliant l'orifice 27 au canal 31 par l'intermédiaire de l'orifice 29, et, d'autre part, un deuxième passage 35, délimité en partie entre la face latérale 22 de la deuxième boîte 24 et la face latérale adjacente de la première boîte 18, qui relie l'orifice 30 au canal 31 par l'intermédiaire des orifices 32 percés dans les faces latérales de la troisième boîte 25.

Le premier passage 34 est muni d'un clapet de refoulement à soupape 36, c'est-à-dire à obturateur mobile sensiblement orthogonalement au siège. Le siège est constitué par la face inférieure 28 de la deuxième boîte 24, et l'obturateur, c'est-à-dire la soupape, est un bloc sensiblement parallélépipédique 37 mobile dans la boîte 24. Ce bloc 37 est de masse calibrée et est posé sur la face 28.

La masse du bloc 37 est calibrée pour équilibrer l'action sur ce dernier d'une pression relative P⁺c d'environ 40 mbars (correspondant à une pression maximale absolue Ps) régnant au niveau de l'orifice 29 du canal 31.

Le bloc 37 est guidé par les parois latérales de la boite 24 et peut se déplacer verticalement entre une position inférieure d'obturation de l'orifice 29 (figure 2), dans laquelle le bloc 37 est en appui sur la face 28, et une position supérieure d'écoulement au travers de l'orifice 29 (figure 3), dans laquelle le bloc 37 est soulevé par rapport à la face 28.

Le deuxième passage 35 est muni d'un clapet d'aspiration à soupape 39 dont le siège est constitué par une partie de la face supérieure 26 de la deuxième boîte 24 et dont l'obturateur, c'est-à-dire la soupape, est une plaque 41 sensiblement rectangulaire, mobile dans la troisième boîte 25. Cette plaque 41 est de masse calibrée et est posée sur la face 26.

La masse de la plaque 41 est calibrée pour équilibrer l'action sur cette dernière d'une pression relative P⁻c d'environ -5 mbars (correspondant à une pression minimale absolue Pi) régnant au niveau d'une partie du canal 31.

Cette plaque 41 est guidée par les parois latérales de la boîte 25 et peut se déplacer verticalement entre une position inférieure d'obturation de l'orifice 30 (figure 2), dans laquelle la plaque 41 est en appui sur la face 26, et une position supérieure d'écoulement au travers de l'orifice 30, dans laquelle la plaque 41 est soulevée par rapport à la face 26 de la deuxième boîte 24 (figure 4).

Le dispositif 12 de régulation de pression est réalisé en matière plastique telle que du polypropylène et/ou du polyéthylène.

Les moyens 5 de distribution permettent de pomper du liquide 2 depuis le récipient 4 pour le distribuer à l'installation consommatrice 3. Le système de fourniture 6 permet de fournir de l'azote ultrapur au récipient 4 pour combler le vide créé dans ce dernier lors de la distribution du liquide 2.

La figure 2 illustre le fonctionnement du dispositif 12 de régulation de pression lorsque la pression relative régnant au niveau de l'entrée 14, de la sortie 16 et donc dans le récipient 4 est comprise entre P⁻c et P⁺c.

Les obturateurs 37 et 41 sont en position d'obturation et assurent ainsi une étanchéité quasi parfaite entre l'entrée 14 et la sortie 16. Seul un débit de fuite d'azote, schématisé par la flèche 43, circule au travers de l'orifice 29, entre les parois de la boîte 24 et le bloc 27, et permet ainsi d'éviter d'éventuelles remontées de vapeurs du liquide 2 vers les moyens 170 de détente lorsque la pompe 9 ne fonctionne pas.

La figure 3 illustre le fonctionnement du dispositif 12 lorsque la pression régnant au niveau de l'entrée 14 est supérieure à P⁺c, par exemple en cas de défaut de fonctionnement des moyens 170 de détente.

L'obturateur 37 est alors en position soulevée d'écoulement et l'obturateur 41 est en position d'obturation. La surpression, par rapport à P⁺c, à l'entrée 14 du dispositif 12 est alors évacuée, via la première conduite 34, vers l'atmosphère ambiante, comme schématisé par la flèche 44. La pression régnant au niveau de la sortie 16, et donc à l'intérieur du récipient 4, est ainsi maintenue en dessous de sa valeur maximale admissible, même dans le cas où la pression régnant au niveau de l'entrée 14 est de 10 bars absolus, grâce au refoulement au travers de l'orifice 27.

La figure 4 illustre le fonctionnement du dispositif 12 lorsque la pression relative régnant dans une partie du canal 31 est inférieure à P⁻c, par exemple lorsque le débit d'azote fourni par le dispositif 12 n'est pas suffisant pour compenser le débit de soutirage de liquide 4. L'obturateur 37 est alors en position d'obturation et l'obturateur 41 est alors en position soulevée d'écoulement. De l'air est alors aspiré depuis l'atmosphère ambiante vers la sortie 16 et donc vers le récipient 4 par l'intermédiaire du deuxième passage 35, comme schématisé par la flèche 45. Ainsi, la pression à l'intérieur du récipient 4 reste supérieure à sa valeur minimale admissible, même avec une pression nulle au niveau de l'entrée 14. Le liquide 2 est alors pollué, mais l'intégrité du récipient est sauvegardée.

Le dispositif 12 de régulation de pression selon l'invention permet donc d'assurer en toute sécurité la fourniture de gaz inerte à un récipient de stockage 4 d'une installation 1 de fourniture de liquide de travail. La consommation d'azote, ou plus généralement de gaz inerte, est pratiquement minimale et adaptée automatiquement au régime de la pompe 9.

De plus, la structure particulièrement simple de ce dispositif permet de le réaliser entièrement en matériaux adaptés pour assurer la préservation de la pureté du gaz inerte utilisé et des liquides de travail distribués.

Enfin, ce dispositif est dépourvu d'organes de réglage, ce qui simplifie son utilisation, et le nombre limité de pièces en mouvement lui procure une usure quasiment nulle dans le temps.

## Revendications

1. Système (6) de fourniture de gaz à un récipient (4), contenant un liquide chimique destiné à la microélectronique, comprenant un dispositif (12) de régulation de pression, des moyens (13) de raccordement d'une entrée (14) dudit dispositif à une source (7) dudit gaz sous pression, et une canalisation (15) de mise en communication d'une sortie (16) dudit dispositif (12) avec le récipient (4), **caractérisé en ce que** le dispositif (12) de régulation de pression, dont l'entrée (14) est raccordée à la source (7) dudit gaz sous pression, et dont la sortie (16)est reliée par un canal (31) à ladite entrée (14) et mise en communication avec le récipient (4), comporte un premier clapet (36) de limitation de la pression à ladite sortie (16) à une valeur maximale prédéterminée Ps, lequel clapet (36) étant un clapet de refoulement disposé dans un premier passage (34) qui relie ledit canal (31) à un orifice (27) d'évacuation de gaz inerte dans l'atmosphère ambiante, un deuxième clapet (39) de maintien de la pression à ladite sortie (16) au-dessus d'une valeur minimale prédéterminée Pi, lequel clapet (39) étant un clapet d'aspiration disposé dans un deuxième passage (35) qui relie ledit canal (31) à un orifice (27) d'admission de fluide de l'atmosphère ambiante dans ce canal.

2. Système selon la revendication 1, **caractérisé en ce que** le premier clapet (36) comprend un premier obturateur (37) mobile entre une position inférieure d'obturation et une position supérieure d'écoulement, sous l'action d'une différence positive P⁺ entre les pressions régnant au niveau d'une partie du canal (31) et dudit orifice d'évacuation (27), agissant contre l'action du poids propre du premier obturateur (37), ledit obturateur (37) étant de masse calibrée pour équilibrer l'action d'une différence de pression prédéterminée P⁺c.

3. Système selon la revendication 2, **caractérisé en ce que** le premier obturateur (37) est posé sur un siège (28) destiné à être sensiblement horizontal.

4. Système selon la revendication 2 ou 3, **caractérisé en ce que** l'orifice d'évacuation (27) est un orifice de communication avec l'atmosphère ambiante de pression Pa, et **en ce que** P⁺c = Ps-Pa.

5. Système selon l'une quelconque des revendications 1 à 4, **caractérisé en ce que** le deuxième clapet (39) comprend un deuxième obturateur (41) mobile entre une position inférieure d'obturation et une position supérieure d'écoulement, sous l'action d'une différence négative P⁻ entre les pressions régnant au niveau d'une partie dudit canal (31) et dudit orifice d'admission (27), agissant contre l'action du poids propre du deuxième obturateur (41), ledit obturateur (41) étant de masse calibrée pour équilibrer l'action d'une différence de pression négative prédéterminée P⁻c.

6. Système selon la revendication 5, **caractérisé en ce que** le deuxième obturateur (37) est posé sur un siège (28) destiné à être sensiblement horizontal.

7. Système selon la revendication 5 ou 6, **caractérisé en ce que** l'orifice d'admission (27) est un orifice de communication avec l'atmosphère ambiante de pression Pa, et **en ce que** P⁻c = Pi - Pa.

8. Système selon l'une des revendications 1 à 7, **caractérisé en ce que** lesdits moyens (13) de raccordement comprennent des moyens (170) de détente du gaz inerte à une pression de consigne Pc comprise entre environ Pi et Ps, et de préférence proche de Ps.

9. Installation (1) de distribution d'un liquide de travail (2), comprenant un récipient (4) de stockage du liquide de travail, des moyens (5) de distribution du liquide de travail raccordés audit récipient (4), un système (6) de fourniture de gaz, notamment inerte, audit récipient (4), et une source (7) dudit gaz sous pression, ledit système (6) de fourniture étant raccordé à ladite source (7) et audit récipient (4) pour combler dans ce dernier un vide dû au soutirage du liquide (2), **caractérisée en ce que** le système (6) de fourniture de gaz est un système selon l'une des revendications 1 à 8.

## Claims

1. System (6) for supplying gas to a container (4), containing a chemical liquid intended for microelectronics, comprising a pressure-regulating device (12), means (13) of connecting an inlet (14) of the said device to a source (7) of the said gas under pressure, and a pipe (15) for placing an outlet (16) of the said device (12) in communication with the container (4), **characterized in that** the pressure-regulating device (12), the inlet (14) of which is connected to the source (7) of the said gas under pressure, and the outlet (16) of which is connected by a duct (31) to the said inlet (14) and placed in communication with the container (4), comprises a first valve (36) for limiting the pressure at the said outlet (16) to a predetermined maximum value Ps, which valve (36) is a delivery valve placed in a first passage (34) which connects the said duct (31) to an orifice (27) for discharging inert gas into the ambient atmosphere, a second valve (39) for keeping the pressure at the said outlet (16) above a predetermined minimum value Pi, which valve (39) is an intake valve placed in a second passage (35) which connects the said duct (31) to an orifice (27) that lets fluid from the ambient atmosphere into this duct.

2. System according to Claim 1, **characterized in that** the first valve (36) comprises a first shutter (37) which can move between a lower shut-off position and an upper flow position, under the action of a positive difference P⁺ between the pressures in part of the duct (31) and at the said discharge orifice (27), acting against the action of the self weight of the first shutter (37), the said shutter (37) being of a mass carefully determined to balance the action of a predetermined pressure difference P⁺c.

3. System according to Claim 2, **characterized in that** the first shutter (37) is placed on a seat (28) intended to be substantially horizontal.

4. System according to Claim 2 or 3, **characterized in that** the discharge orifice (27) is an orifice for communicating with the ambient atmosphere at pressure Pa, and **in that** P⁺c = Ps-Pa.

5. System according to any one of Claims 1 to 4, **characterized in that** the second valve (39) comprises a second shutter (41) which can move between a lower shut-off position and an upper flow position under the action of a negative difference P⁻ between the pressures in part of the said duct (31) and at the said intake orifice (27), acting against the action of the self weight of the second shutter (41), the said shutter (41) being of a mass carefully determined to balance the action of a predetermined negative pressure difference P⁻c.

6. System according to Claim 5, **characterized in that** the second shutter (41) is placed on a seat (26) intended to be substantially horizontal.

7. System according to Claim 5 or 6, **characterized in that** the intake orifice (27) is an orifice for communicating with the ambient atmosphere at pressure Pa, and **in that** P⁻c = Pi - Pa.

8. System according to one of Claims 1 to 7, **characterized in that** the said connecting means (13) comprise means (170) of expanding the inert gas to a datum pressure Pc which lies approximately between Pi and Ps, and preferably close to Ps.

9. Installation (1) for dispensing a working liquid (2), comprising a container (4) for storing the working liquid, means (5) of dispensing the working liquid which are connected to the said container (4), a system (6) for supplying gas, especially inert gas, to the said container (4), and a source (7) of the said gas under pressure, the said supply system (6) being connected to the said source (7) and to the said container (4) so as to fill in the latter a vacuum produced as a result of the withdrawing of the liquid (2), **characterized in that** the gas-supply system (6) is a system according to one of Claims 1 to 8.

## Patentansprüche

1. Gasversorungssystem (6) mit einem Behälter (4), der eine für die Mikroelektronik bestimmte, chemische Flüssigkeit enthält, mit einer Vorrichtung (12) zur Druckregelung, Mitteln (13) zum Anschluss eines Eingangs (14) der Vorrichtung an eine Quelle (7) für das Druckgas und eine Leitung (15) zur Verbindung eines Ausgangs (16) der Vorrichtung (12) mit dem Behälter (4), **dadurch gekennzeichnet, dass** die Druckregelvorrichtung (12), deren Eingang (14) an die Quelle (7) des Druckgases angeschlossen ist und deren Ausgang (16) durch einen Kanal (31) an den Eingang (14) angeschlossen ist und mit dem Behälter (4) in verbunden ist, folgendes umfasst: ein erstes Ventil (36) zur Begrenzung des Drucks am Ausgang (16) auf einen vorbestimmten Höchstwert Ps, wobei das Ventil (36) eine Rückstromsperre ist, die in einem ersten Durchgang (34) angeordnet ist, der den Kanal (31) mit einer Öffnung (27) zum Ablass eines Inertgases in die Umgebungsluft verbindet, ein zweites Ventil (39), um den Druck am Ausgang (16) über einem vorbestimmten Mindestwert Pi zu halten, wobei das Ventil (39) ein Ansaugventil ist, das in einem zweiten Durchgang (35) angeordnet ist, der den Kanal (31) mit einer Öffnung (27) zum Einlass von Fluid aus der Umgebungsluft in diesen Kanal verbindet.

2. System nach Anspruch 1, **dadurch gekennzeichnet, dass** das erste Ventil (36) einen ersten Verschluss (37) umfasst, der zwischen einer unteren Verschlussposition und einer oberen Fließposition verschiebbar ist unter der Wirkung eines positiven Druckunterschieds P⁺ zwischen den auf Höhe eines Teils des Kanals (31) und der Ablassöffnung (27) herrschenden Drücken, wobei der Druckunterschied gegen die Wirkung des Eigengewichts des ersten Verschlusses (37) wirkt, wobei der Verschluss (37) eine kalibrierte Masse hat, um mit der Wirkung eines vorbestimmten Druckunterschieds P⁺c im Gleichgewicht zu sein.

3. System nach Anspruch 2, **dadurch gekennzeichnet, dass** der erste Verschluss (37) auf einem Sitz (28) aufsitzt, der im Wesentlichen horizontal sein soll.

4. System nach Anspruch 2 oder 3, **dadurch gekennzeichnet, dass** die Ablassöffnung (27) eine Öffnung zur Verbindung mit der Umgebungsluft des Drucks Pa ist und dass P⁺c = Ps - Pa.

5. System nach einem der Ansprüche 1 bis 4, **dadurch gekennzeichnet, dass** zweite Ventil (39) einen zweiten Verschluss (41) umfasst, der zwischen einer unteren Verschlussposition und einer oberen Fließposition verschiebbar ist unter der Wirkung eines negativen Druckunterschieds P- zwischen den auf Höhe eines Teils des Kanals (31) und der Ablassöffnung (27) herrschenden Drücken, wobei der Druckunterschied gegen die Wirkung des Eigengewichts des zweiten Verschlusses (41) wirkt, wobei der Verschluss (41) eine kalibrierte Masse hat, um mit der Wirkung eines vorbestimmten negativen Druckunterschieds P⁻c im Gleichgewicht zu sein.

6. System nach Anspruch 5, **dadurch gekennzeichnet, dass** der zweite Verschluss (41) auf einem Sitz (26) aufsitzt, der im Wesentlichen horizontal sein soll.

7. System nach Anspruch 5 oder 6, **dadurch gekennzeichnet, dass** die Einlassöffnung (27) eine Öffnung zur Verbindung mit der Umgebungsluft des Drucks Pa ist und dass P⁻c = Pi - Pa

8. System nach einem der Ansprüche 1 bis 7, **dadurch gekennzeichnet, dass** die Anschlussmittel (13) Mittel (170) zum Entspannen des Inertgases auf einen Solldruck Pc umfassen, der zwischen Pi und Ps und vorzugsweise nahe Ps liegt.

9. Anlage (1) zur Verteilung einer Arbeitsflüssigkeit (2) mit einem Behälter (4) zur Speicherung der Arbeitsflüssigkeit, Mitteln (5) zur Verteilung der Arbeitsflüssigkeit, die an den Behälter (4) angeschlossen sind, einem System (6) zur Gasversorgung des Behälters (4) insbesondere mit Inertgas und einer Quelle (7) für das Druckgas, wobei das Versorgungsystem (6) an die Quelle (7) und den Behälter (4) angeschlossen ist, um diesen letzteren infolge des Abziehens der Flüssigkeit (2) mit einem Vakuum anzufüllen, **dadurch gekennzeichnet, dass** das Gasversorgungssystem (6) ein System nach einem der Ansprüche 1 bis 8 ist.
